Europäisches Patentamt

European Patent Office

Office européen des brevets

(11) Publication number: **0 513 476 A1**

# EUROPEAN PATENT APPLICATION

(21) Application number: **92102347.9**

(22) Date of filing: **12.02.92**

(51) Int. Cl.⁵: **B60R 1/00**

(30) Priority: **17.05.91 JP 113102/91**

(43) Date of publication of application:
**19.11.92 Bulletin 92/47**

(84) Designated Contracting States:
**DE FR GB IT**

(71) Applicant: **Bundo, Mutsuro**
**6-11 Funai-cho 1-chome**
**Oita-shi, Oita-ken(JP)**

(72) Inventor: **Bundo, Mutsuro**
**6-11 Funai-cho 1-chome**
**Oita-shi, Oita-ken(JP)**

(74) Representative: **Henkel, Feiler, Hänzel &**
**Partner**
**Möhlstrasse 37**
**W-8000 München 80(DE)**

(54) **View field display system for automobile.**

(57) Herein disclosed is a view field display system for automobile which comprises: view field sensors (2, 2a, 2b, 2c and 2d) disposed on suitable places of the outer panel of a car (1) for sensing desired fields of view; image transmitting means for transmitting visual images sensed by the view field sensors to the vicinity of a dashboard panel (8) located in front of the driver's seat; and image display means (3L, 3R, 4B and 4F) for displaying the visual images transmitted by the image transmitting means on places which can be easily observed by the driver.

Fig. 1

Forward

Fig. 4 (a)

## BACKGROUND OF THE INVENTION:

### Field of the Invention

The present invention relates to a view field display system for displaying the field of view of a car driver, i.e., the side and back fields of view in a conspicuous place.

### Description of the Prior Art

Generally speaking, an automobile of the prior art is constructed to allow its back side view fields to be indirectly observed through side mirrors protruding from its front sides and its back view field to be indirectly observed through a room mirror disposed in the vicinity of the driver's seat.

The aforementioned back side and back view field observing means of the automobile has the following problems to be solved.

Specifically, the side mirrors for observing the back sides protrude relatively long to the sides of the car body so that they frequently hit persons or obstacles in a dangerous manner. As a result, the side mirrors are liable to be broken. Moreover, the side mirrors are located outside of the car so that their observations are obstructed by the reveals, the water droplets on the windshield glass and so on.

Further, since what the side mirrors can visualize are the virtual images of distant objects, they do not focus the images on their planes. As a result, the image locations are moved if there arises a change in the position of the driver, the change of the driver, and the slight horizontal or vertical position of the driver's seat. For each of such cases, the angles of the side mirrors have to be troublesomely adjusted.

Moreover, when the car is to pass through a narrow place, its body width is sufficiently small for the place, but the car frequently is disabled to go through by the protruding side mirrors.

Moreover, the side mirrors are subjected to a high air resistance so that they make serious noises at a high speed to obstruct a silent drive.

Moreover, the side mirrors are liable to be hit by persons or children while the car is parking or at a stop, so that their set view fields will go out of order.

Since, moreover, the side mirrors are located outside of the car body, the driver is obliged to turn his forward gaze relatively highly while driving so as to confirm the back sides. In order to return his gaze from the side to the front, he has to consume a relatively long time for the drive inhibiting even an instant carelessness and may possibly be encountered by an accident.

For the same reasons as those of the side mirrors, the room mirror for observing the back has its image locations moved if there arises a change in the position of the driver, the change of the driver, and the slight horizontal or vertical position of the driver's seat. For each of such cases, the angle of the room mirror has to be troublesomely adjusted.

Since, moreover, the driver observes a mirror image through the rear windshield, his view field is seriously influenced by the clouded state of the rear windshield and the head or hat of the passenger or passengers resting on the rear seat.

## SUMMARY OF THE INVENTION:

In view of the above-specified problems, the present invention has an object to provide a view field display system for automobile to display a field image desired by a driver on a place easily observable for the driver.

In order to solve those problems, according to the present invention, there is provided a view field display system for automobile which comprises: view field sensors disposed on suitable places of the outer panel of a car for sensing desired fields of view; image transmitting means for transmitting visual images sensed by the view field sensors in the vicinity of a dashboard panel located in front of the driver's seat; and image display means for displaying the visual images transmitted by the image transmitting means on places which can be easily observed by the driver.

With this construction, the present invention has the following operations.

The view field sensors are disposed on suitable places of the outer panel of a car for sensing desired fields of view, and the sensed visual images are transmitted by the image transmitting means and displayed by the image display means disposed on places which can be easily observed by the driver. Thus, it is possible to observe the outside of the car, especially, the back sides and the back which have been difficult to observe in the prior art. Unlike the prior art in which the view fields of the back sides and back are observed directly through the reflecting mirrors, the visual images are once detected by the view field sensors and are transmitted by the image transmitting means and displayed by the image display means. As a result, the positions of attaching the view field sensors are not influenced by the position of the driver's seat so that the sensors need not be markedly protruded. Thus, the view field sensors will neither damage the persons nor be broken by them or obstacles. Unlike the side mirrors, moreover, the sensors do not largely protrude sideways to eliminate the effective enlargement of the car width while the car passes through a narrow place.

Since, moreover, the visual images are displayed by the image display means, their locations are not influenced by the driver's posture or the horizontal or vertical position of the driver's seat.

BRIEF DESCRIPTION OF THE DRAWINGS:

Fig. 1 is a top plan view of a car according to a first embodiment of the present invention.

Fig. 2 presents perspective views of a view field sensor 2 of Fig. 1: (a) is diagram showing the position of the view field sensor 2 relative to a car 1; and (b) is an enlarged view of the view field sensor 2.

Fig. 3 is a side elevation showing the back portion of a car according to a second embodiment of the present invention.

Fig. 4 presents front elevations showing display frames according to the first embodiment: (a) is a view showing righthand and lefthand frames attached separated at the righthand and lefthand ends; and (b) is a view showing the righthand and lefthand frames attached at the center and adjacent to each other.

Fig. 5 presents diagrams of panels having frames according to the first and second embodiments: (a) to (d) are diagrams having changed combinations of the righthand and lefthand frames and the back frame.

Fig. 6 presents at (a) to (c) diagrams having changed combinations of the righthand, lefthand, back and front frames containing the front frame to be used in a large-sized car according to a third embodiment of the present invention.

DESCRIPTION OF THE PREFERRED EMBODIMENTS:

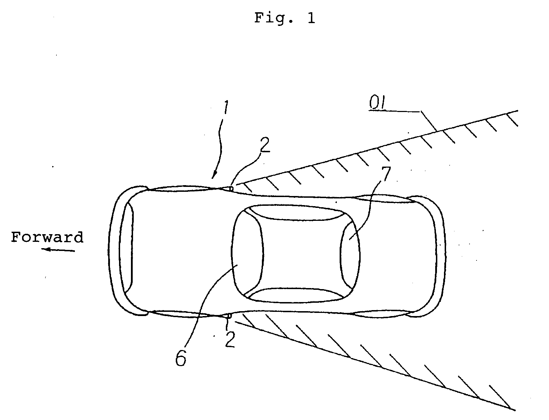

The first embodiment of the present invention will be described in the following with reference to Figs. 1, 2 and 4.

In the present embodiment, the side mirrors of the prior art are replaced by view field sensors disposed in positions similar to those of mounting the side mirrors, and image display means are disposed in the panel (or instrument board) located in front of the driver's seat. The back view field is still covered like the prior art by the room mirror.

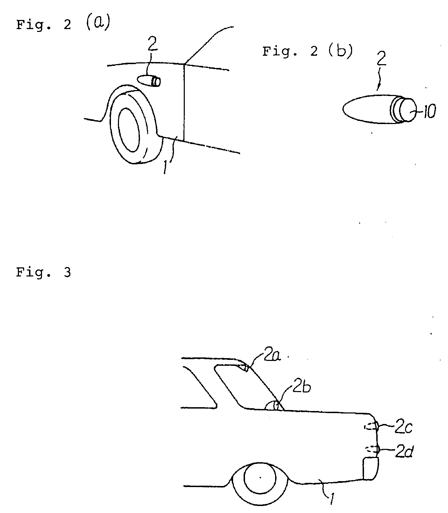

Fig. 1 is a top plan view showing a car which is equipped with the present embodiment. In Fig. 1: reference numeral 1 designates a (passenger) car; numeral 2 view field sensors which are disposed slightly in front of the driver's seat and at the righthand and lefthand sides of the outer panel of the car 1 and enabled to sense visual images at the back sides, as will be described in more detail with reference to Fig. 2; numeral 6 a front windshield; numeral 7 a rear windshield; and 01 a conceptional field of view of the view field sensors 2, as hatched.

Fig. 2 presents perspective views showing the lefthand one 2 of the righthand and lefthand view field sensors of Fig. 1. Fig. 2 presents at (a) the positional relation between the car 1 and the view field sensor 2 and at (b) an enlarged view of the view field sensor 2. Numeral 10 designates an objective lens for covering the back sides of the car 1 within its field of view and feeding an input to image transmitting means.

The objective lens 10 or the view field sensor 2 may either be fixed or may have its optical axis turned slightly in the vertical and horizontal directions either manually or by means of a small-sized motor. Moreover, the objective lens 10 may have its surface covered and protected with desired rubber or plastics.

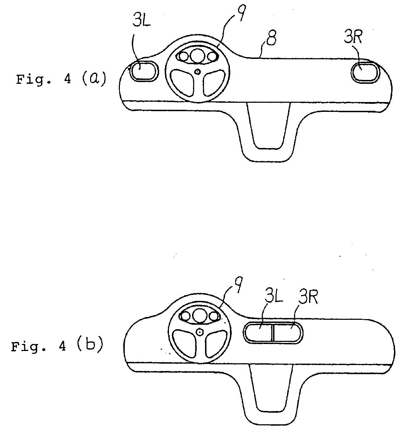

Fig. 4 presents schematic front elevations showing a panel which is equipped with frames for displaying the visual images sensed by the view field sensors 2, and is seen to the front of the car 1 from the driver's seat. Hereinafter, the panel will be wholly shown in front views, unless otherwise specified. Moreover, the frames as image display means are suffixed by letter L for the lefthand side, by letter R for the righthand side, by letter F for the front and by letter B for the back, although the latter two are not used in the present embodiment.

Fig. 4 shows at (a) an example in which the righthand and lefthand frames are arranged at the righthand and lefthand sides of the panel and at (b) an example in which the righthand and lefthand frames are arranged adjacent to each other at the center of the panel. In this Figure: reference numeral 3L designates a lefthand frame for displaying the visual image which is sensed by the lefthand view field sensor 2; numeral 3R designates a righthand frame for displaying the visual image which is sensed by the righthand view field sensor 2; numeral 8 a panel; and numeral 9 a handle.

As the image transmitting means for transmitting the images from the view field sensors 2 to the righthand frame 3R and the lefthand frame 3L, well-known means such as glass fibers or a video camera system may be used, although not shown.

In case the glass fibers are used, the visual image obtained by the objective lens 10 is fed through the glass fibers to the back of the lefthand frame 3L, for example, in which the images are focused again on the frame from the back of the lefthand frame 3L by means of a lens. The corrections of inverted images are accomplished by the well-known means, i.e., by incorporating a prism or concave lens in an optical path leading from the view field sensor 2 to the lefthand frame 3L. As this frame, frosted glass or a semitransparent thin film may be used, and further semitransparent plate having a fluorescent material applied thereto may be used if the image is to be grasped in gradation. The glass fibers are a suitable material if they are sectionally arranged to have corresponding image receiving and taking planes (like commercially available ones), because a proper visual image is always obtained independently of the intermediate path. Another advantage is obtained in that the image inverting means such as the prism need not be employed if the glass fibers are twisted midway a half turn.

It is arbitrary to use which of the wide or narrow angle lens is to be used as the objective lens 10 of the view field sensor 2. In order to achieve a relatively wide field of view, it is desirable to use a convex lens having a slightly short focal length. If, on the contrary, a convex lens having a relatively long focal length is used as the objective lens 10, the field of view is necessarily narrowed, but the image distortion is reduced with a larger focal depth to sharpen a visual image. In this case, it is desirable to compensate the narrow field of view by swinging the view field sensor 2 or the objective lens 10. In case the objective lens is swung, the image receiving planes of the glass fibers are swung together to prevent the image from being distorted. In other words, the normal planes to the longitudinal direction of the numerous glass fibers are always held normal to the optical axis of the objective lens 10. These relations similarly apply to the righthand frame 3R.

In case the video camera system is adopted as the view field sensor 2, the lens of a TV camera corresponds to the objective lens 10, and a small-sized video camera is housed in the barrel of the view field sensor 2. As the image transmitting means wire cables are used for transmitting the image to the lefthand frame 3L, for example. Since, in this case, the lefthand frame 3L corresponds to the TV frame, the frame is backed by the portion corresponding to the small-sized TV set. It is arbitrary to use either a fluorescent material or a liquid crystal in the frame itself. These relations similarly apply to the righthand frame 3R.

Although the present invention has been described separately for both the glass fiber system and the video camera system, there is naturally acceptable a system combining the advantages of the two systems. For example, the visual image is sensed and transmitted by the view field sensor 2 and the glass fibers, and as the lefthand frame 3L the frame of the small-sized TV set is adopted. In this case, the lefthand frame 3L is backed by the image processing unit of the TV set. These relations similarly apply to the righthand frame 3R.

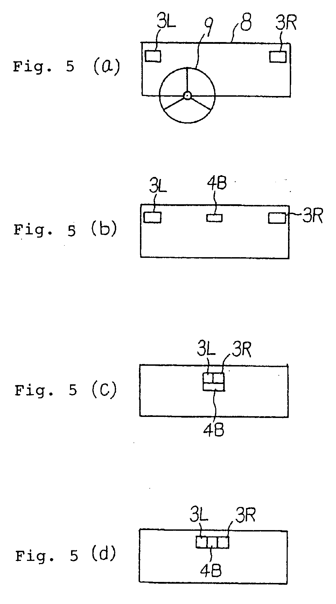

With reference to Figs. 3 and 5, here will be described a second embodiment in which the side mirrors and the room mirror are eliminated so that all the back sides and the back of the car are observed by the view field sensors and the frames.

First of all, the sides and the back sides are observed according to the first embodiment. For observing the back, as shown at the back side of the car 1 in Fig. 3, any or a desired combination of view field sensors 2a, 2b, 2c and 2d is used to sense the visual image of the back. Each of these view field sensors 2a to 2d has a construction similar to that of the sensor 2 but suffixed by the letters a to d according to their mounted positions so that it may not be confused with another. The transverse positions of mounting the view field sensors 2a to 2d on the car 1 are located generally at the center of the car 1 (although not especially limitative thereto). The image transmitting means and the image display means are similar to those of the first embodiment. However, the display positions of the frames are basically located at the central portion of the panel 8 so that they may not be confused with the frames of the first embodiment. Fig. 5 presents diagrams showing the panel 8 of Fig. 4 schematically in horizontally elongated rectangles. The diagram of Fig. 5(a) corresponds to that of Fig. 4(a). In case the view field sensors 2a to 2d are used in such combination that the back frame 4B of Fig. 5(b) presents the frame corresponding to any or a desired combination of the view field sensors 2a to 2d, the frame is switched to display the view field sensor 2a and then another view field sensor 2d, for example, by means of a change-over switch. Alternatively, the lefthand frame 3L, the righthand frame 3R and the back frame 4B may be combined, as shown at (c) and (d).

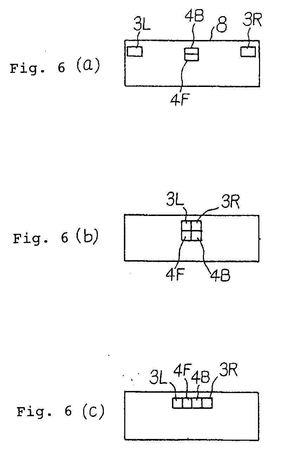

The so-called "long-nosed" large-sized car having a large engine room is difficult to observe the immediate front of the nose. If a sensor is further prepared in front of the nose (or front) on the outer panel of the car against the difficulty for sensing the front, the convenience and safety of the car drive are better improved. An example of the image display means according to a third embodiment is shown in Fig. 6. A front frame 4F is newly added to the combination shown in Fig. 5.

As has been described hereinbefore, as the view field sensors 2 and 2a to 2d the lenses having relatively limited narrow fields of view are used. However, the view field sensors should not be naturally limited thereto but fisheye lenses, infrared ray cameras for the night or view field sensors for objects may be also used. Moreover, the mounting positions should not be limited to those of the first and second embodiments.

On the other hand, the image transmitting means and the image display means should not be limited to the aforementioned ones.

Moreover, although the first to third embodiments exemplify the car by the passenger car, the car should not be limited to the passenger car but may be any one such as a truck or a damp car. On the other hand, the glass fibers may naturally be coated to form a cable, and the lenses for receiving, transmitting and inverting the images may be a suitable combination of convex and concave ones for magnifying or reducing the image and for eliminating aberrations.

As has been described hereinbefore, according to the first to third embodiments, the back sides, the back sides and the back, or all the directions including the sides, back and front are sensed by the view field sensors 2 and 2a to 2d having considerably small protrusions from the outer panel of the car 1, and the sensed images are transmitted by the image transmitting means to the lefthand frame 3L, the righthand frame 3R, the back frame 4B and the front frame 4F so that they are displayed in the most observable positions for the car driver. Thus, there is attained an advantage that the view field sensors 2 and 2a to 2d do not contact and damage persons or obstacles unlike the side mirrors of the prior art.

Without any contact with the persons or obstacles, another advantage is that the view field sensors 2 and 2a to 2d are not broken.

Since the visualized images on the lefthand frame 3L, the righthand frame 3R, the back frame 4B and the front frame 4F are observed, their positions are fixed unlike the prior art, in which the image positions are changed according to the position of the driver or a slight displacement of the horizontal or vertical position of the driver's seat so that the angular adjustment of the mirrors have to be troublesomely accomplished.

Since the view field sensors 2 and 2a to 2d have little protrusion from the side of the car 1, another advantage is that the passage through a narrow place is hardly obstructed.

Since the view field sensors 2 and 2a to 2d have little sideway protrusion, another advantage is that noises due to he coming wind are hardly caused even at a high speed run.

Since the view field sensors 2 and 2a to 2d have little sideway protrusion, other advantages are that little adjusting distortion will arise and that an once adjustment will not require any additional semipermanently because the lefthand frame 3L, the righthand frame 3R, the back frame 4B and the front frame 4F used have no change in the image positions even at different observatory positions.

Since the image display means focuses or projects the visual image on its frame, the position and clearness of the image are determined independently of the position of the driver or the vertical or horizontal position of the driver's seat. Thus, another advantage is that the view field display system can be used as it is once it is adjusted to the optimum state by a third party or specialist when shipped from the car maker or in a service factory.

Since the frames displaying the visual images are disposed in the most observable positions on the panel, the driver can visually confirm at a glance the sides, the back sides, the back and the front with hardly changing his eyes observing the front and can restore his initial eyes. Thus, another advantage is that the frequency of car accidents due to the glance change is remarkably reduced.

Since all the frames for displaying the images are located in the car compartment, their observations are not troublesomely by the reveals or the like. Another advantage is that the confirmation of the back is not influenced in the least by the cloud of the rear windshield or the head of the passenger or passengers on the rear seat.

Thanks to the construction thus far described, the present invention has the following effects.

The visual images are once sensed by the view field sensors disposed on the outer panel of the car and are transmitted by the image transmitting means and displayed by the image display means which are so disposed as can be easily observed by the driver. Thus, the view field sensors are not influenced by the position and change of the driver and the seat situations so that they need hardly protrude from the car body.

As a result, the view field sensors do not hit or contact with persons or obstacles to give a remarkably high safety. The sensors themselves are hardly damaged. The adjustment can be resorted to a third party or a professional so that the driver himself is not troubled in the least. Moreover, the adjustment distortion hardly occurs. Moreover, the field of view is not obstructed in the least by the clouds and water or rain droplets of the windshields and by the reveals. Moreover, the displayed images are not moved according to the position of the driver or the vertical or horizontal movement of the driver's seat.

## Claims

1. A view field display system for automobile characterized in comprising: view field sensors (2, 2a, 2b, 2c, 2d) disposed on suitable places of the outer panel of a car (1) for sensing desired fields of view; image transmitting means for transmitting visual images sensed by said view field sensors to the vicinity of a dashboard panel (8) located in front of the driver's seat; and image display means (3L, 3R, 4B, 4F) for displaying the visual images transmitted by said image transmitting means on places which can be easily observed by the driver.

2. A view field display system for automobile according to Claim 1, characterized in that said view field sensors (2) are disposed on the front half of the outer side panel of said car.

3. A view field display system for automobile according to Claim 1, characterized in that said view field sensors (2, 2a, 2b, 2c, 2d) are disposed on the front half of the outer side panel and the back of the outer panel of said car.

4. A view field display system for automobile according to Claim 1, characterized in that said view field sensors (2, 2a, 2b, 2c, 2d) are disposed on the front half of the outer side panel, and the back and front of the outer panel of said car.

Fig. 1

Forward

Fig. 2 (a)

Fig. 2 (b)

Fig. 3

Fig. 4 (a)

Fig. 4 (b)

Fig. 5 (a)

Fig. 5 (b)

Fig. 5 (C)

Fig. 5 (d)

Fig. 6 (a)

Fig. 6 (b)

Fig. 6 (c)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 248 511 (BISSENDEN, DEREK) <br> * page 5, line 20 - page 6, line 22; figures 1,4-6 * <br> --- | 1-4 | B60R1/00 |
| X | PATENT ABSTRACTS OF JAPAN <br> vol. 14, no. 221 (M-971)(4164) 10 May 1990 <br> & JP-A-2 053 651 ( HIDEKI KISHI ) 22 February 1990 <br> * abstract * <br> ----- | 1-3 | |
| | | | **TECHNICAL FIELDS SEARCHED (Int. Cl.5 )** |
| | | | B60R |

The present search report has been drawn up for all claims

| Place of search | Date of completion of the search | Examiner |
|---|---|---|
| THE HAGUE | 27 AUGUST 1992 | DUBOIS B.F.J. |

EPO FORM 1503 03.82 (P0401)